Europäisches Patentamt

European Patent Office

Office européen des brevets

(11) Veröffentlichungsnummer: **0 266 672**
**A2**

(12) # EUROPÄISCHE PATENTANMELDUNG

(21) Anmeldenummer: 87115869.7

(22) Anmeldetag: 29.10.87

(51) Int. Cl.⁴: **H02K 23/02** , H02K 23/24 , H02K 23/22

(30) Priorität: 03.11.86 DE 3637339
04.12.86 DE 3641511
24.06.87 DE 3720862
04.09.87 DE 3729680

(43) Veröffentlichungstag der Anmeldung:
**11.05.88 Patentblatt 88/19**

(84) Benannte Vertragsstaaten:
**CH FR GB IT LI NL SE**

(71) Anmelder: **Rottmerhusen, Hans Hermann**
**Grashofweg 34**
**D-2245 Tellingstedt(DE)**

(72) Erfinder: **Rottmerhusen, Hans Hermann**
**Grashofweg 34**
**D-2245 Tellingstedt(DE)**

(54) **Reihenschluss-Permanentmagnet-Motor.**

(57) Um einen hohen Wirkungsgrad der Wendepole (17) zu erreichen, sowie die Ankerrückwirkung aufzuheben, als auch eine Entmagnetisierung der Magnetsegmente (1) zu verhindern, wird eine zweiteilige Wendepol-Kompensationswicklung zu jedem Wendepol vorgeschlagen, die aus den Wendepol-Kompensationswicklungs-Hälften ( 18a und 18b ) besteht und jeweils mit einer Wicklungsseite in Nuten (22) im Bereich der Hauptpolfelder im magnetischem Rückschlußteil angeordnet sind, wobei die andere Wicklungsseite von den Wendepol-Kompensationswicklungs-Hälften ( 18a und 18b ) gemeinsam in einer Nute (21) in der Polmitte der Wendepole (17) angeordnet sind. Für eine mechanische Befestigung der Magnetsegmente (1), sind entsprechende Befestigungsmittel in den Zwischenräumen (23) vorgesehen, hierbei dienen die Wendepole (17) als Widerlager. Zur Verhinderung einer Entmagnetisierung der Magnetsegmente und zur Steuerung der Drehzahl, wird weiterhin die Anordnung der Magnetsegmente auf den Polkernen einer Feldwicklung vorgeschlagen.

Fig. 10

## Reihenschluß-Permanentmagnet-Motor

Die Erfindung geht aus von einem Reihenschluß-Permanentmagnet-Motor nach der Gattung der unabhängigen Patentansprüche.

Vorrichtungen die zur Verhinderung einer Entmagnetisierung von Permanentmagneten und zur Erleichterung der Stromwendung dienen, sind im allgemeinen bekannt.

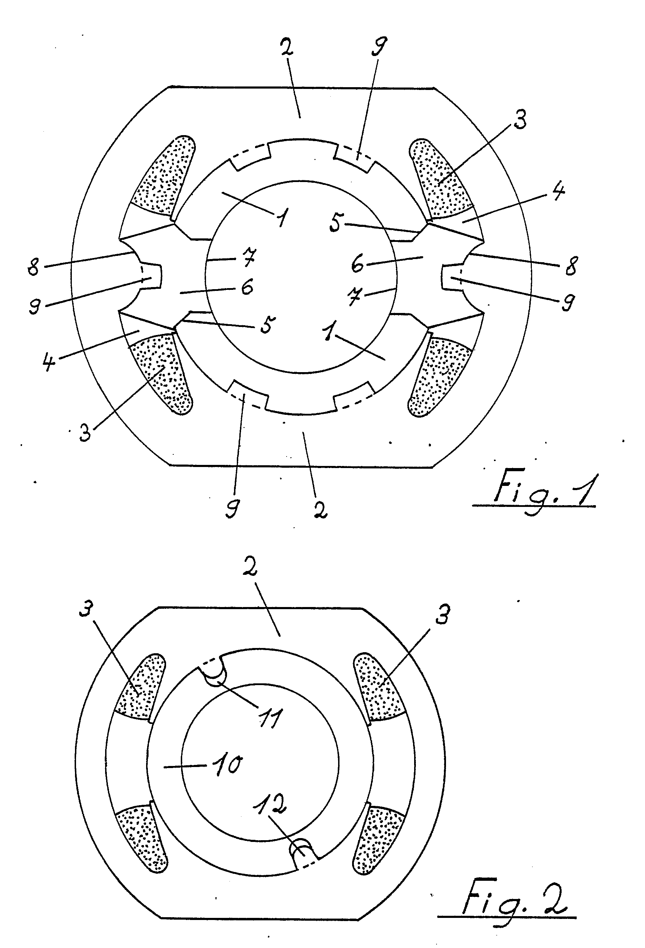

In der DE-OS 23 58 o96 wird eine Hilfsfeldwicklung vorgeschlagen, die mindestens auf einem Teil der Polschuhe des Ständers ein magnetisches Gleichfeld erzeugt, daß der durch den Anker erzeugten, entmagnetisierenden magnetomotorischen Kraft entgegenwirkt, wobei die Hilfsfeldwicklung auf die Dauermagnete angeordnet und in Reihe mit dem Anker geschaltet ist, Fig. 2, 2a, sowie Seite vier zweiter Absatz und Anspruch 1.

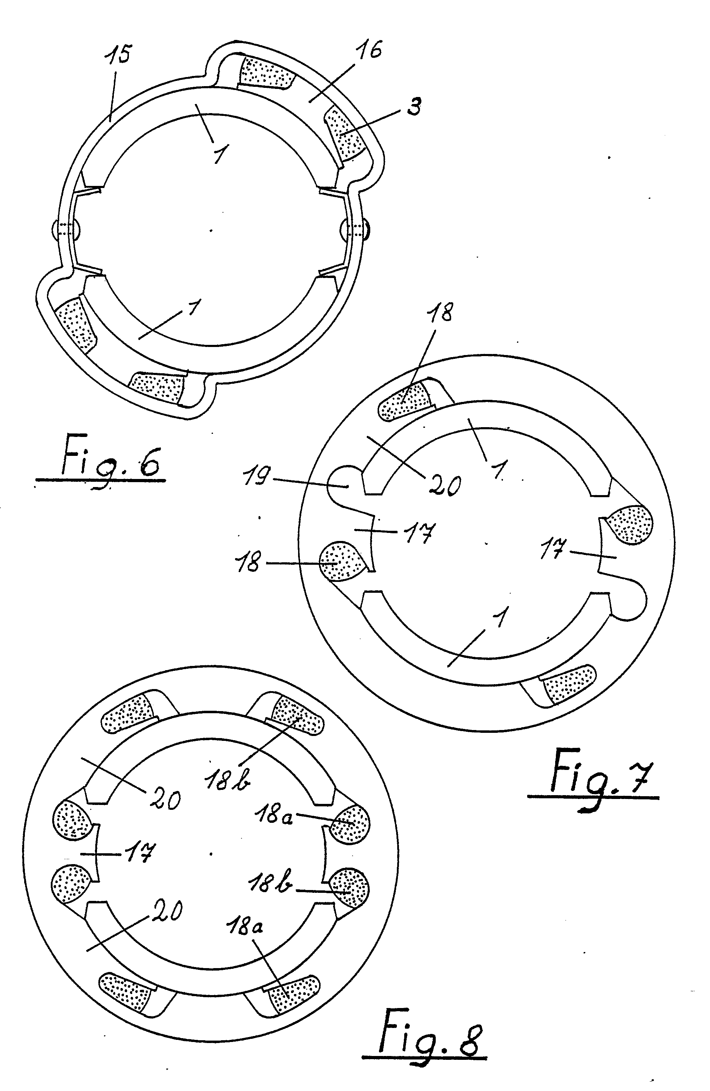

In der US-PS 36 86 524 sind auf den Magnetkanten und somit um die Magnetsegmente 3o, eine Wicklung 38 die mit dem Anker in Reihe geschaltet ist, angeordnet Fig. 6. In Fig. 5 ist die Wicklung 38 zweiteilig ausgelegt, wobei die Wicklungsteile 4o, 42 und 44, 46 jeweils übereinander liegen. Die Wicklung 38 dient der Verhinderung einer Entmagnetisierung der Magnetsegmente 3o.

In der DE-OS 14 88 437 wird ein Gleichstromgenerator vorgestellt, wo einerseits Dauermagnete sich am magnetischen Rückschlußteil befinden und auf diese Dauermagnete sind Polschuhe angeordnet. Eine aufgeschobene Erregerwicklung auf die Dauermagnete dient zum aufmagnetisieren der Dauermagnete. Andererseits sind Dauermagnete im Inneren der geblechten Pole eingebettet.

Aus der US-PS 32 o1 625 ist eine sinngemäße gleiche Anordnung bekannt.

In der US-PS 35 66 251 sind auch Permanentmagnete, auf denen Polschuhe angeordnet sind, am magnetischen Rückschlußteil befestigt, wobei entsprechende Wicklungen auf die Magnete geschoben sind, die mit einer Steuereinrichtung, zur Verhinderung einer Entmagnetisierung der Permanentmagnete,verbunden sind.

Aus der CH-PS 435 424 ist eine sinngemäße gleiche Anordnung bekannt, wobei zur Verhinderung einer Entmagnetisierung der Permanentmagnete durch die Ankerrückwirkung, eine in Nuten der Polschuhe verlegte Kompensationswicklung angeordnet ist.

Anordnungen, so wie sie in den erwähnten Druckschriften beschrieben sind, in dem eine Wicklung auf den Magnetkanten beziehungsweise um die Dauermagnete herum angeordnet sind, und wo die Dauermagnete zum Teil mit Polschuhen versehen sind, und hierbei eine derartige Wicklung die Aufgabe hat, die Dauermagnete aufzumagnetisieren als auch eine Entmagnetisierung zu verhindern, haben sich in der Praxis als nicht vorteilhaft erwiesen, wobei der wirtschaftliche Faktor besonders zum Tragen kommt.

In der Patentschrift DD 129 oo1 wird eine gemeinsame Anordnung, zur Verbesserung der Dauermagnetstabilität und der Kommutierung von permanenterregten Gleichstrommotoren, vorgeschlagen.

Für diese Aufgabe ist eine zweiteilige gegensinnig angeschlossene Wendezusatzwicklung 1 und 2 angeordnet, wobei jeder Wicklungsteil jeweils einen Dauermagnet-Hauptpol 3 und einen Wendepol 4 umschlingen und mit dem Anker in Reihe geschaltet ist.

Eine derartige Anordnung, wo im Polfeld einer Wicklung sich ein Wendepol als auch ein Hauptpol befindet, hat den erheblichen Nachteil, daß das Magnetfeld am Hauptpol an der auflaufenden Kante am stärksten verstärkt wird, und sich somit auf die Ankerrückwirkung äußerst negativ auswirkt.

In der US-PS 1244 868 ist eine ähnliche Anordnung, wie in der Patentschrift DD 129 oo1 dargestellt.

Das Hauptfeld wird von der Wicklung 6, die mit dem Anker in Reihe geschaltet ist, erregt, wobei die Wicklung 6 die Hauptpole und die Wendepole umschlingt. Eine weitere Wicklung 5 ist in Nebenschluß geschaltet und umschlingt nur die Hauptpole, wobei der Wicklung 5 die Aufgabe zukommt, das Hauptfeld zu schwächen oder zu verstärken.

Bei einer derartigen Anordnung der Wicklungen 5 und 6 wird auch das Magnetfeld am Hauptpol an der auflaufenden Kante am stärksten gebildet, mit allen seinen negativen Folgen für die Ankerrückwirkung.

Der Erfindung liegt die Idee zugrunde, einen Reihenschluß-Permanentmagnet-Motor von der kleinsten bis zur größten Baugröße zu schaffen, bei dem durch eine entsprechende Vorkehrung die Ankerrückwirkung kompensiert wird, und gleichzeitig die Wendepole erregt, als auch die Magnetsegmente vor einer Entmagnetisierung geschützt werden.

Diese Aufgabe wird bei einer gattungsgemäßen Einrichtung durch die kennzeichnenden Merkmale der unabhängigen Ansprüche gelöst.

Der erfindungsgemäße Reihenschluß-Permanentmagnet-Motor mit den kennzeichnenden Merkmalen der Patentansprüche hat zum Stand der Technik den Vorteil, daß unter Verwendung einer Wendepol-Kompensationswicklung eine Motorauslegung gefunden worden ist, die eine besonders vorteilhafte Abstimmung der Ankerbelastung auf die Ankerrückwirkung und der entmagnetisierenden Einwirkung vom Ankerfeld, sowie eine optimale Stromwendung gestattet und eine wesentlich höhere Volumenausnutzung vom Motor erlaubt, in Bezug auf Materialeinsparung und Wirkungsgrad, wobei auf hochwertiges und teures Magnetmaterial verzichtet werden kann.

Ein weiterer Vorteil ist, daß eine solche Wendepol-Kompensationswicklung sich auch besonders vorteilhaft für einen Motor eignet, wo das Feld durch eine Feldwicklung erregt wird.

Zur weiteren Erläuterung wird auf die Zeichnung Bezug genommen, in der Ausführungsbeispiele der Erfindung dargestellt sind:

Es zeigt:

Fig. 1 bis 6 eine Ansicht vom Ständer mit Permanentmagneten auf den Polkernen der Feldwicklung.

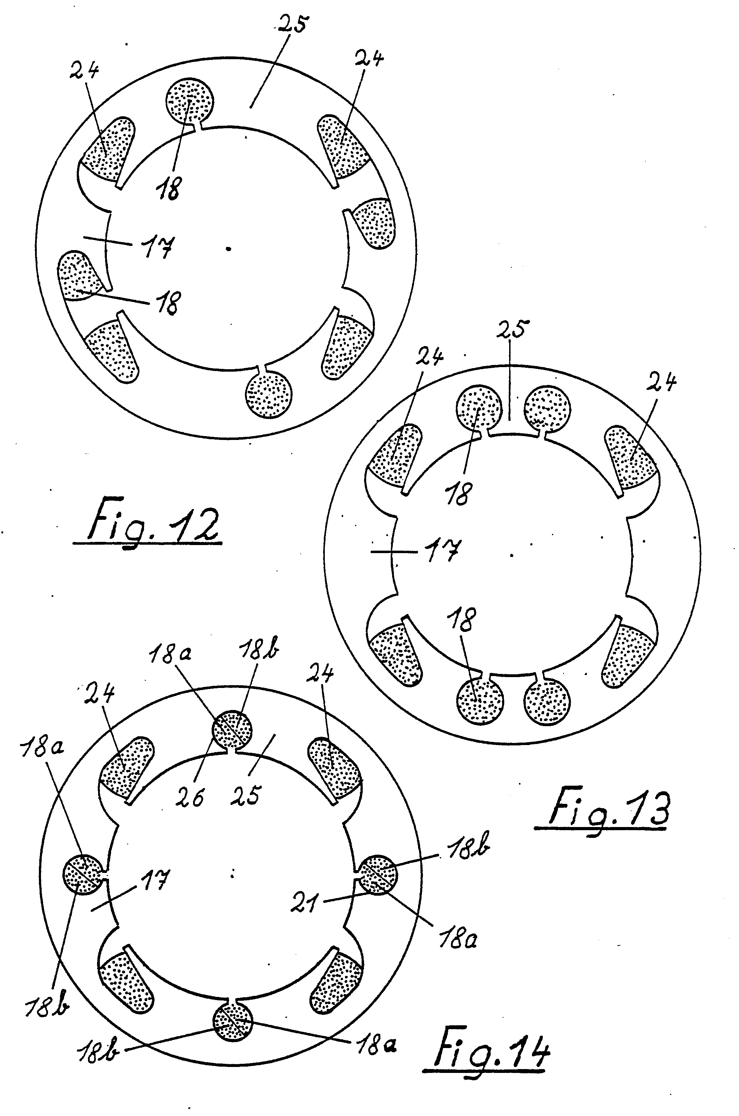

Fig. 7 bis 11 eine Ansicht vom Ständer mit Permanentmagneten zur Felderregung und einer Wendepol-Kompensationswicklung.

Fig. 12 bis 14 eine Ansicht vom Ständer mit einer Wendepol-Kompensationswicklung für einen Reihenschluß-Motor.

Fig. 1 zeigt eine Ansicht vom Ständerblechpaket mit Permanentmagneten als Magnetsegmente 1 auf den Polkernen 2 der Feldwicklung 3.

Ein Anker in der bekannten Art ist nicht dargestellt.

Die Aussparungen 4 am Blechpaket für die Feldwicklung 3 sind so gehalten, daß die Polkerne 2 an der Fußform 5 von den Magnetsegmenten 1 auslaufen. Die Feldwicklung 3 ist beim anlassen des Motors mit dem Anker in Reihe geschaltet, hierbei dient sie einerseits als Drossel für die Stromaufnahme vom Anker und bewirkt im Moment der Stromeinschaltung eine Überdimensionierung der Felderregung, womit eine Entmagnetisierung der Magnetsegmente 1 verhindert und ein gedämpfter sanfter Anlauf erreicht wird. Andererseits ist die Feldwicklung so gehalten, daß durch eine stufenweise Abschaltung der Feldwicklung 3, die Drehzahl vom Motor gesteuert werden kann und durch die völlige Abschaltung der Feldwicklung 3, der Motor permanentmagnetisch erregt wird und hierdurch Nebenschluß-Drehzahlverhalten aufweist, wodurch sehr hohe Nenndrehzahlen erreicht werden.

Für eine sichere Befestigung und eine einfache Montage der Magnetsegmente 1 sind zwischen den Magnetsegmenten 1 entsprechende Paßstücke angeordnet.

Diese Paßstücke weisen zum Anker hin einen Kreisbogen auf. Zu der Fußform 5 von den Magnetsegmenten hin, sind die Paßstücke 6 der Fußform 5 genau angeglichen. Zum Blechpaket hin sind die Paßstücke 6 mit einer Führungsnut 8 versehen, wobei das Bleckpaket dieser Führungsnut angepaßt ist. Gegen Verschiebungen durch Vibration in axialer Längsrichtung sind die Magnetsegmente 1 und die Paßstücke 6 durch Laschen 9, die am äußeren Blech vom Blechpaket angeordnet sein können, abgesichert. Das Material von den Paßstücken 6 sollte flexibel sein, wobei die Paßstücke 6 mit einem entsprechenden Druckaufwand eingesetzt werden.

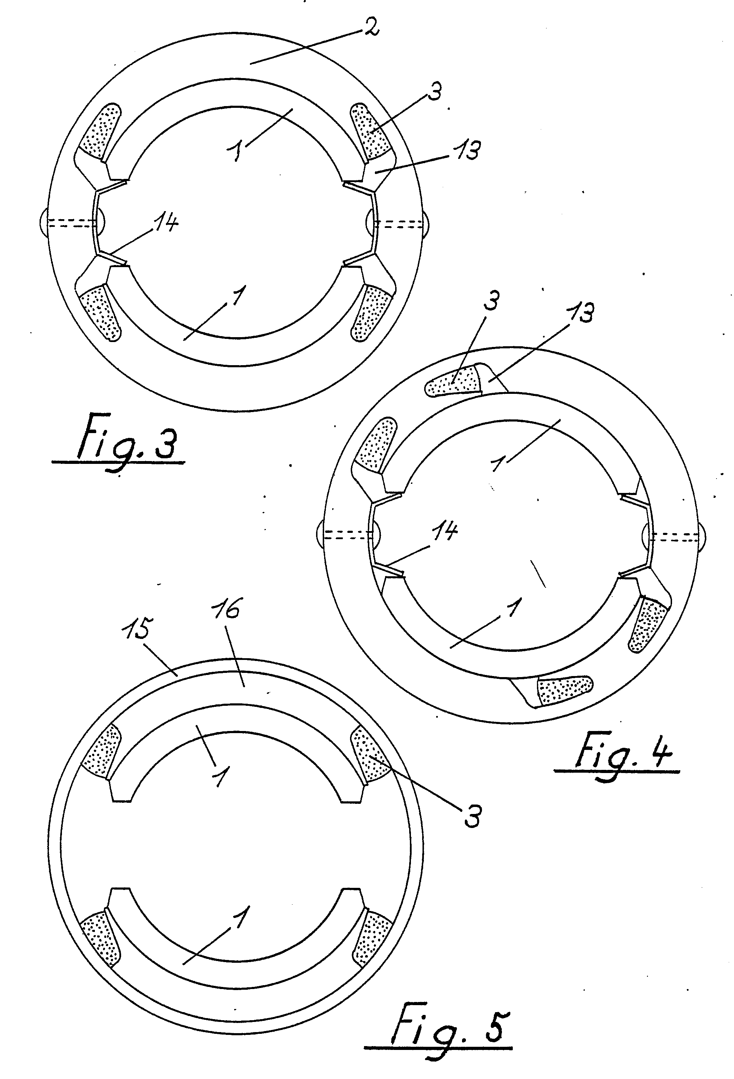

Die Magnetsegmente können auch durch eine Klammerbefestigung Fig. 3,4 u. 6, als auch durch Klebemittel befestigt werden Fig. 5, 7, 8, 9 und 11.

In Fig. 2 ist ein Permanentmagnetring 1o auf den Polkernen 2 der Feldwicklung 3 angeordnet. Gegen Verschiebungen kann der Magnetring durch Einkerbungen 11 am Magnetring, wobei Laschen 12 jeweils in diese Einkerbungen eingreifen, abgesichert werden.

Fig. 3 zeigt eine Ansicht vom Ständerring mit Magnetsegmenten 1 auf den Polkernen 2 der Feldwicklung 3.

Für die Feldwicklung 3 sind entsprechende Auskerbungen 13 im Ring angeordnet, wobei die Feldwicklung derart ausgelegt sein kann, daß ihr lediglich die Aufgabe zukommt, eine Entmagnetisierung der Magnetsegmente 1 zu verhindern und in Reihe mit dem Anker geschaltet ist. Die Magnetsegmente 1 werden durch Klammern 14 in ihrer Lage gehalten.

Da bei einem Permanentmagnetmotor die Magnetsegmente 1 durch das Ankerfeld nur an der ablaufenden Kante entmagnetisiert werden, zur Magnetmitte hin die Entmagnetisierung etwa linear abnimmt und in der auflaufenden Hälfte die Magnetsegmente1 aufmagnetisiert werden, muß eine Entmagnetisierungsbeständigkeit der Magnetsegmente 1 nur an der ablaufenden Magnetkante erfüllt werden, somit genügt es, bei vorgegebener Drehrichtung die Magnetsegmente nur an der ablaufenden Kante, zur Magnetmitte hin, gegen eine Entmagnetisierung abzusichern.

In Fig. 4 ist eine derartige Anordnung dargestellt. Die Feldwicklung 3 umfasst somit nur die halbe Breite der Magnetsegmente 1, wobei die Feldwicklung 3 in Reihe mit dem Anker geschaltet und so zum Anker und zu den Magnetsegmenten bemessen ist, daß das von der Feldwicklung erzeugte Magnetfeld ausreicht, eine Entmagnetisierung der Magnetsegmente zu verhindern. Durch die Anordnung einer derartigen Feldwicklung, kann somit auf hochwertige und teure Magnetwerkstoffe verzichtet werden.

Für einen Gleichstrom-Kleinmotor kann der magnetische Rückschlußteil aus einem gezogenen oder gewalztem Blech 15 Fig. 5 erstellt werden. Für die Aufnahme der Feldwicklung 3 sind dann Polschuhe 16 am magnetischen Rückschlußteil in der gesamten Magnetbreite vorgesehen und auf diese Polschuhe 16 sind die Magnetsegmente 1 angeordnet, wobei die Polschuhe 16 in Fig. 6 auf der halben Magnetbreite angeordnet sind, in dem das Blech 15 vom Rückschlußteil derart geformt ist, daß die Magnetsegmente 1 mit der anderen Hälfte der Magnetbreite auf dem Rückschlußteil aufliegen.

Für schnellaufende und hochbeanspruchte Motoren ist es vorteilhaft, Wendepole und eine Kompensationswicklung anzuordnen. In den Fig. von 7 bis 14 ist eine derartige Anordnung dargestellt. Der magnetische Rückschlußteil ist hierbei derart gestaltet, daß zwischen den Magnetsegmenten 1, in der neutralen Zone, Wendepole 17 Fig. 7 vorhanden sind, wobei das Wendepolfeld durch eine entsprechende Wendepol-Kompensationswicklung 18, die in vorgesehene Nuten oder Aussparungen angeordnet und in Reihe mit dem Anker geschaltet ist, gebildet wird.

Die Wendepol-Kompensationswicklung 18 besteht jeweils, zu einem Wendepol und zu einem Hauptpol, aus einer einheitlichen Wicklung, wobei die eine Wicklungsseite der Wendepol-Kompensationswicklung 18 den Wendepol 17 umschlingt und die andere Wicklungsseite im magnetischen Rückschlußteil hinter dem Magnetsegment 1 angeordnet ist Fig. 7.

Das Polfeld der Wendepol-Kompensationswicklung ist durch die Aussparung 19 zweigeteilt und besteht aus zwei Polfeldbereichen. Der eine Polfeldbereich 2o dient zur Feldverstärkung der Magnetsegmente 1 an der ablaufenden Kante, und durch den anderen Polfeldbereich wird der Wendepol 17 erregt, wodurch im Polfeldbereich 2o die Ankerrückwirkung kompensiert wird und gleichzeitig werden die Magnetsegmente 1 vor einer Entmagnetisierung geschützt, sowie die Stromwendung durch die Wendepole erheblich erleichtert, hierbei ist es ausreichend, daß die Wendepol-Kompensationswicklung nur zu einem Drittel hinter den Magnetsegmenten 1 angeordnet ist.

Soll die Ankerrückwirkung auch an der auflaufenden Kante kompensiert werden, sowie der Motor für den Rechts-Linkslauf vorgesehen sein, so ist die Wendepol-Kompensationswicklung 18 zu jedem Wendepol 17 zweiteilig ausgelegt, und mit jeweils der einen Wicklungsseite hinter den Magnetsegmenten 1 an der ablaufenden Kante und an der auflaufenden Kante angeordnet, und die andere Wicklungsseite umschlingt jeweils den Wendepol 17, hierbei ist die zweiteilige Wendepol-Kompensationswicklung 18 a und 18 b in Reihe, mit der gleichen Polbildung, geschaltet Fig. 8.

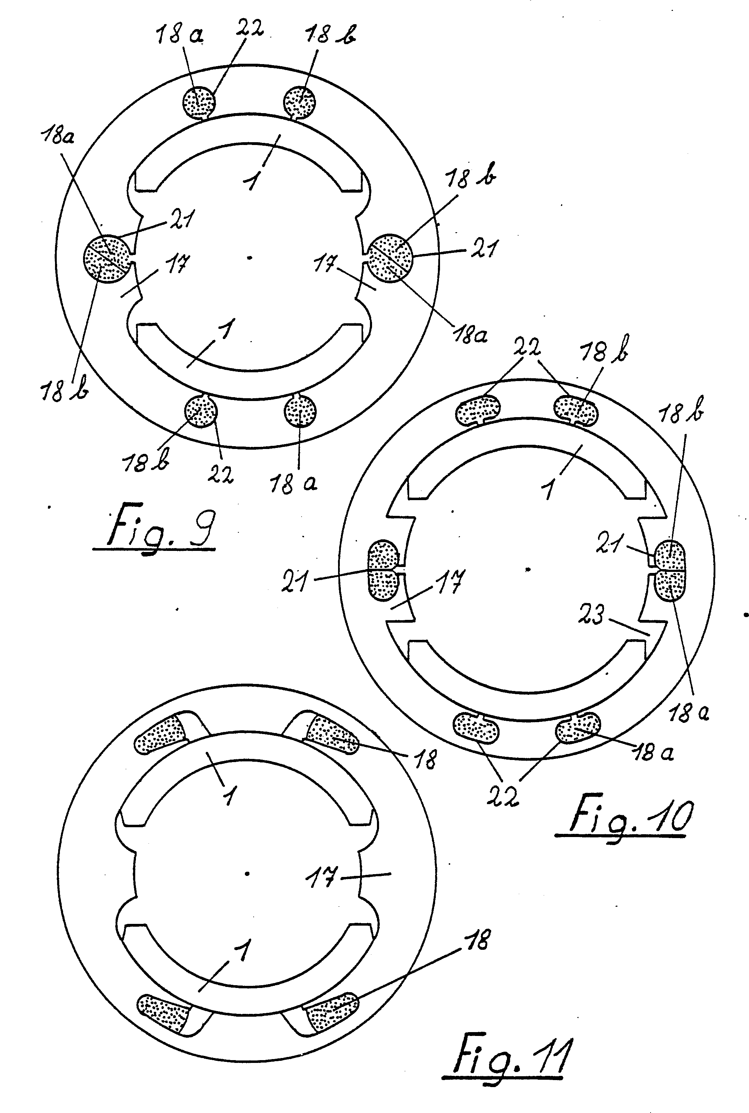

Um einen hohen Wirkungsgrad der Wendepole 17 zu erreichen, sowie die Ankerrückwirkung aufzuheben, als auch eine Entmagnetisierung der Magnetsegmente 1 an der ablaufenden Kante zu verhindern, ist die zweiteilige Wendepol-Kompensationswicklung 18 a, 18 b mit jeweils einer Wicklungsseite gemeinsam in einer Nute 21 in der Polmitte der Wendepole 17 angeordnet und mit der anderen Wicklungsseite jeweils hinter den Magnetsegmenten 1 in einer Nute 22,Fig. 9 und 1o. Die eine Hälfte der Wendepol-Kompensationswicklung bewirkt an der ablaufenden Kante der Magnetsegmente 1 eine Feldverstärkung, und an der auflaufenden Kante vom Wendepol 17 wird das Wendefeld, bis zur Polmitte, von dieser Hälfte der Wendepol-Kompensationswicklung mit dem halben Feldanteil erregt.

Die andere Hälfte der Wendepol-Kompensationswicklung bewirkt an der auflaufenden Kante der Magnetsegmente 1 eine Feldschwächung, wobei an der ablaufenden Kante vom Wendepol 17, bis zur Polmitte, das Wendefeld mit etwa dem gesamten Feldanteil von dieser Hälfte der Wendepol-Kompensationswicklung erregt wird.

Durch eine derartige Feldverteilung auf den Wendepolen, wo das Feld an der auflaufenden Kante der Wendepole am schwächsten und an der ablaufenden Kante am stärksten ist, wird der gesamte Stromwendevorgang stark beschleunigt, womit eine optimale Stromwendung erreicht wird.

Der Anker, die Bürsten und die Wendepole sollten so aufeinander abgestimmt sein, daß die Spule die durch die Bürsten kurzgeschlossen wird, innerhalb der höchsten Wendefeldspannung in dieser Spule, die Kurzschließung beendet ist.

Durch die Anordnung der Wendepol-Kompensationswicklung in der Mitte der Wendepole, wird eine sichere und einfache mechanische Befestigung der Magnetsegmente 1 ermöglicht. In Fig. 1o ist eine derartige Anordnung dargestellt.

In den Zwischenräumen 23 von den Magnetsegmenten 1 zu den Wendepolen 17 können entsprechende Paßstücke aus einem geeigneten Material angeordnet werden. Die Paßstücke sind dann der Fußform von den Magnetsegmenten, sowie den Wendepolen, die als Widerlager dienen, genau angepaßt. Die Magnetsegmente 1 können auch durch Klammern oder dergleichen befestigt werden, wobei eine derartige Befestigung auch in dem Zwischenraum 23 angeordnet ist. Um den magnetischen Rückschlußteil nicht zu stark durch die Nuten 21 und 22 zu schwächen, ist es vorteilhaft die Nuten 21 und 22 mit einer flachen Form zu versehen.

In Fig. 11 ist eine Wendepol-Kompensationswicklung 18 für den Rechts-Linkslauf derart angeordnet, daß zum Wendepol 17 die eine Wicklungsseite der Wendepol-Kompensationswicklung 18 sich hinter dem Magnetsegment 1 an der ablaufenden Kante und die andere Wicklungsseite sich hinter dem Magnetsegment 1 an der auflaufenden Kante im magnetischen Rückschlußteil, befindet. Hierbei wird im Bereich der auflaufenden Kante der Magnetsegmente 1 die Magnetfelder im magnetischen Rückschlußteil überlagert, wobei das Magnetfeld von der Wendepol-Kompensationswicklung auf die Wendepole 17 verlagert wird. Durch eine derartige Anordnung wird auch einerseits die Ankerrückwirkung kompensiert und zugleich die Magnetsegmente 1 vor einer Entmagnetisierung geschützt, sowie die Wendepole 17 erregt und somit die Stromwendung erleichtert.

Die Wendepol-Kompensationswicklung findet auch gute Verwendung bei Reihenschlußmotoren. In Fig. 12 und 13 ist ein Blechpaket als Rückschlußteil mit der Feldwicklung 24 für einen Reihenschlußmotor dargestellt. In der neutralen Zone besitzt das Blechpaket entsprechende Wendepole 17 und in den Polkernen 25 der Feldwicklung 24 sind Nuten oder Aussparungen für die Aufnahme der Wendepol-Kompensationswicklung 18 angeordnet, hierbei ist die Wendepol-Kompensationswicklung 18 mit dem Anker in Reihe geschaltet. Die Wirkungsweise der Wendepol-Kompensationswicklung 18 ist die Gleiche, wie in den Fig. 7, 8 und 11. Durch eine derartige Anordnung der Wendepol-Kompensationswicklung wird der Wirkungsgrad beachtlich erhöht.

Die zweiteilige Wendepol-Kompensationswicklung kommt auch besonders vorteilhaft bei einem Reihenschlußmotor (Universalmotor) zur Anwendung Fig. 14. Das Hauptfeld wird durch die Feldwicklung 24 erregt. Die Wendepol-Kompensationswicklung 18 a und 18 b sind jeweils mit einer Wicklungsseite gemeinsam in einer Nute 26 in die Mitte der Polkerne 25 der Feldwicklung 24 angeordnet. Die andere Wicklungsseite der Wendepol-Kompensationswicklung 18 a und 18 b sind, wie in den Fig. 9 und 1o, gemeinsam in der Nute 21 in der Polmitte der Wendepole 17 angeordnet.

Die Wendepol-Kompensationswicklung 18 a und 18 b können auch aufgeteilt in mehreren Nuten in den Polkernen 25 der Feldwicklung 24 angeordnet werden.

Die Wirkungsweise der Wendepol-Kompensationswicklung ist die Gleiche, wie in den Fig. 9 und 1o, wobei selbst bei Wechselstrombetrieb und eine Nenndrehzahl von über 3o ooo U/min., kaum (kein) Bürstenfeuer in Erscheinung tritt. Die Wendepol-Kompensationswicklung findet auch bei Nebenschlußmotoren gute Verwendung.

Die dargestellten Ausführungsbeispiele kommen für alle mehrpaarpoligen Ausführungen sinngemäß zur Anwendung.

Zur Erfindung gehört alles dasjenige, was in der Beschreibung enthalten, oder in der Zeichnung dargestellt ist, einschließlich dessen, was in Abweichung von den konkreten Ausführungsbeispielen für den Fachmann naheliegt.

## Ansprüche

1. Reihenschluß-Permanentmagnet-Motor mit einem aus einer Feldwicklung oder Permanentmagneten und einer Wendepol-Kompensationswicklung an einem magnetischem Rückschlußteil gebildeten Ständer mit Wendepolen, in dem innerhalb ein Anker mit einer Trommelwicklung rotiert, wobei die Wendepol-Kompensationswicklung mit dem Anker in Reihe geschaltet ist, dadurch gekennzeichnet, daß eine zweiteilige Wendepol-Kompensationswicklung ( 18 a, 18 b ) jeweils zu einem Wendepol (17) und zum Hauptfeld, an der ablaufenden Kante und an der auflaufenden Kante, aus einer einheitlichen Wicklung, die in Reihe mit der gleichen Polbildung geschaltet ist, besteht, wobei die Wendepol-Kompensationswicklung (18 a, 18 b) zum Hauptfeld, an der ablaufenden Kante und an der auflaufenden Kante jeweils mit der einen Wicklungsseite hinter den Magnetsegmenten (1) in Nuten (22) im magnetischem Rückschlußteil ( Fig. 9 u. 1o), beziehungsweise in Nuten (26) in den Polkernen (25) der Feldwicklung (24 Fig. 14), angeordnet ist, und die andere Wicklungsseite der Wendepol-Kompensationswicklung ( 18a, 18 b ) sind gemeinsam in einer Nute (21) in der Polmitte der Wendepole (17) angeordnet ( Fig. 9,1o,14), hierdurch bewirkt der eine Teil der Wendepol-Kompensationswicklung ( 18 a, 18 b ) an der ablaufenden Kante vom Hauptfeld eine Feldverstärkung, und an der auflaufenden Kante vom Wendepol (17) wird das Wendefeld bis zur Polmitte, mit dem halben Feldanteil von diesem Teil der Wendepol-Kompensationswicklung erregt, und der andere Teil der Wendepol-Kompensationswicklung bewirkt an der auflaufenden Kante vom Hauptfeld eine Feldschwächung, hierbei wird an der ablaufenden Kante vom Wendepol (17), bis zur Polmitte, das Wendefeld mit etwa dem gesamten Feldanteil von diesem Teil der Wendepol-Kompensationswicklung erregt, wodurch das Polfeld der Wendepole (17) in zwei ungleich stark ausgeprägte Polfelder aufgeteilt ist, hierdurch wird das Wendefeld an der auflaufenden Kante am schwächsten und an der ablaufenden Kante am stärksten gebildet, womit gleichzeitig durch die Wendepol-Kompensationswicklung ( 18 a, 18 b ) der gesamte Stromwendevorgang stark beschleunigt, und die Ankerrückwirkung kompensiert wird, als auch die Magnetsegmente (1) an der ablaufenden Kante vor einer Entmagnetisierung geschützt werden.

2. Reihenschluß-Permanentmagnet-Motor nach Anspruch 1 dadurch gekennzeichnet, daß die Wendepol-Kompensationswicklung ( 18 Fig.7) jeweils zu einem Wendepol und zu einem Hauptpol aus einer einheitlichen Wicklung besteht, wobei die eine Wicklungsseite der Wendepol-Kompensationswicklung

(18) den Wendepol (17) umschlingt und die andere Wicklungsseite im magnetischem Rückschlußteil hinter dem Magnetsegment (1) angeordnet ist, hierbei ist die Wendepol-Kompensationswicklung (18) einerseits nur an der ablaufenden Kante hinter den Magnetsegmenten ( 1 Fig. 7), als auch an der auflaufenden Kante hinter den Magnetsegmenten (1) angeordnet (Fig. 8 ), wobei die Wendepol-Kompensationswicklung dann zu jedem Wendepol aus einer zweiteiligen Wendepol-Kompensationswicklung ( 18 a, 18 b ), die in Reihe mit der gleichen Polbildung geschaltet ist, besteht, wodurch im Polfeldbereich (2o) die Ankerrückwirkung kompensiert wird und gleichzeitig werden die Magnetsegmente (1) an der ablaufenden Kante vor einer Entmagnetisierung geschützt, sowie die Wendepole (17) erregt.

3. Reihenschluß-Permanentmagnet-Motor nach den Ansprüchen 1 und 2 dadurch gekennzeichnet, daß die Wendepol-Kompensationswicklung (18) in Nuten oder Aussparungen, im magnetischen Rückschlußteil zu jeweils einem Wendepol, mit der einen Wicklungsseite hinter den Magnetsegmenten an der ablaufenden Kante und mit der anderen Wicklungsseite hinter den Magnetsegmenten an der auflaufenden Kante angeordnet ist (Fig.11), wodurch die Magnetfelder im magnetischem Rückschlußteil, im Bereich der auflaufenden Kante der Magnetsegmente (1), überlagert werden, und das Magnetfeld der Wendepol-Kompensationswicklung (18) wird in diesem Bereich auf die Wendepole (17) verlagert, hierdurch wird die Ankerrückwirkung durch die Wendepol-Kompensationswicklung (18) an der ablaufenden Kante und an der auflaufenden Kante kompensiert und gleichzeitig werden die Wendepole (17) erregt, sowie die Magnetsegmente (1) an der ablaufenden Kante vor einer Entmagnetisierung geschützt.

4. Reihenschluß-Permanentmagnet-Motor nach den Ansprüchen von 1 bis 3 dadurch gekennzeichnet, daß die Wendepol-Kompensationswicklung ( 18 Fig. 12) einerseits mit der einen Wicklungsseite jeweils in Nuten in den Polkernen (25) der Feldwicklung (24) an der ablaufenden Kante angeordnet ist, und mit der anderen Wicklungsseite den Wendepol (17) umschlingt, sowie andererseits mit der einen Wicklungsseite in den Polkern (25) der Feldwicklung (24) an der ablaufenden Kante und mit der anderen Wicklungsseite in den Polkern (25) der Feldwicklung (24) an der auflaufenden Kante angeordnet ist ( Fig. 13), wobei eine zweiteilige Wendepol-Kompensationswicklung ( 18 a, 18 b Fig. 14 ) mit jeweils der einen Wicklungsseite gemeinsam in einer Nute (26) in den Polkern (25) der Feldwicklung (24) und mit jeweils der anderen Wicklungsseite gemeinsam in einer Nute (21) in der Polmitte vom Wendepol (17) angeordnet ist.

5. Reihenschluß-Permanentmagnet-Motor nach den Ansprüchen von 1 bis 4 dadurch gekennzeichnet, daß die Wicklungsseiten der Wendepol-Kompensationswicklung (18 und 18 a, 18 b) aufgeteilt, in mehreren Nuten, im magnetischem Rückschlußteil hinter den Magnetsegmenten (1), als auch in den Polkernen (25) der Feldwicklung (24), sowie in den Polkernen der Wendepole (17), angeordnet sind.

6. Reihenschluß-Permanentmagnet-Motor mit einem aus einer Feldwicklung und Permanentmagneten an einem magnetischen Rückschlußteil gebildeten Ständer, in dem innerhalb ein Anker mit einer Trommelwicklung rotiert, wobei die Feldwicklung mit dem Anker in Reihe geschaltet ist und zur Verhinderung einer Entmagnetisierung der Permanentmagnete dient, dadurch gekennzeichnet, daß auf den Polkernen (2 Fig. 1) der Feldwicklung (3) einerseits Magnetsegmente (1) angeordnet sind, wobei die Aussparungen (4) am Blechpaket für die Feldwicklung (3) so gehalten sind, daß die Polkerne (2) an der Fußform (5) von den Magentsegmenten (1) auslaufen, und andererseits ein Magnetring ( 1o Fig. 2) auf den Polkernen (2) der Feldwicklung (3) angeordnet ist, hierbei dient die Feldwicklung (3), beim anlassen des Motors, als Drossel für die Stromaufnahme vom Anker, und durch eine stufenweise Abschaltung der Feldwicklung (3), wird die Drehzahl vom Motor gesteuert, wobei nach der völligen Abschaltung, der Motor nur permanentmagnetisch erregt wird.

7. Reihenschluß-Permanentmagnet-Motor nach Anspruch 6 dadurch gekennzeichnet, daß der magnetische Rückschlußteil aus einem Ring mit entsprechenden Auskerbungen (13 Fig.3 ), in die die Feldwicklung (3) angeordnet ist, besteht, hierbei kann die Feldwicklung (3) nur die halbe Breite der Magnetsegmente (1), an der ablaufenden Kante, umfassen (Fig.4).

8. Reihenschluß-Permanentmagnet-Motor nach den Ansprüchen 6 und 7 dadurch gekennzeichnet, daß am magnetischen Rückschlußteil (15 Fig. 5), Polschuhe (16) für die Feldwicklung (3)einerseits auf der gesamten Magnetbreite vorgesehen sind und auf die Polschuhe (16) sind die Magnetsegmente (1) angeordnet, andererseits sind die Polschuhe (16) auf der halben Magnetbreite angeordnet (Fig. 6), so daß die Magnetsegmente (1) mit der anderen Hälfte der Magnetbreite auf dem Rückschlußteil (15) aufliegen.

9. Reihenschluß-Permanentmagnet-Motor mit einem aus Permanentmagneten an einem magnetischen Rückschlußteil gebildeten Ständer, wobei die Magnetsegmente sich mit ihren beiden Schenkeln auf in Achsrichtung verlaufenden Stegen abstützen, dadurch gekennzeichnet, daß zwischen den Magnetsegmenten (1), in der neutralen Zone ( Fig.1 ), die Stege als Paßstücke (6) ausgebildet sind, und zum Anker hin einen Kreisbogen (7) aufweisen, wobei die Paßstücke (6) zu der Fußform (5) von den Magnetsegmenten (1) hin, der Fußform (5) genau angeglichen sind und zum Blechpaket hin sind die Paßstücke (6) mit einer Führungsnut (8) versehen, hierbei ist das Blechpaket dieser Führungsnut angepaßt und in der axialen Längsrichtung sind die Paßstücke (6) durch Laschen (9) abgesichert, und für eine mechanische Befestigung der Magnetsegmente (1) am Ständer mit Wendepolen, sind in den Zwischenräumen ( 23 Fig. 1o), von den Magnetsegmenten (1) zu den Wendepolen (17), entsprechende Befestigungsmittel angeordnet, wobei die Wendepole (17) als Widerlager dienen.

0 266 672

*Fig. 1*

*Fig. 2*

Fig. 3

Fig. 4

Fig. 5

0 266 672

Fig.6

Fig.7

Fig.8

Fig. 9

Fig. 10

Fig. 11

Fig. 12

Fig. 13

Fig. 14